# EUROPEAN PATENT APPLICATION

(11) **EP 2 567 621 A1**
(43) Date of publication of application: **13.03.2013**
(21) Application number: 11180876.2
(22) Date of filing: 12.09.2011
(51) Int. Cl.: A23G 1/00, A23G 1/36

(54) **Method of producing chocolate**

(71) Applicant: Kraft Foods R & D, Inc., Northfield, IL 60093-2753 (US)
(72) Inventor: Paggios, Konstantinos, 8280 Kreuzlingen (CH); Thiele, Martin, 83607 Holzkirchen (DE); Balzer, Hartmut Heinrich, Dr., 85238 Petershausen (DE); Zsigmond, Imola, Blackwell Bromsgrove B60 1QH (GB)
(74) Representative: HOFFMANN EITLE

(57) **Abstract**

A method of producing chocolate comprising mixing for 10-120 minutes a composition having a temperature of 35-50°C, the composition comprising:
chocolate base mass; and
one or more surfactants;
wherein the composition has a fat content of 22-30 wt.% and a water content of at least 1.1 wt.% relative to the total mass of the composition.

## Description

### Technical Field

The present invention relates to a method of producing chocolate. The method facilitates the manufacture of chocolate that is heat resistant without requiring any particular downstream processing. The method achieves these effects with similar or reduced efforts when compared with other methods of the art.

### Background of the Invention

Chocolate is consumed more for pleasure than nutrition, so consumer appeal is of paramount importance in chocolate production. Consumer appeal dictates that chocolate should remain relatively brittle during storage so that it can be broken or snapped prior to consumption, but then melts quickly in the mouth.

The susceptibility of chocolate towards temperature-induced spoilage and deformation remains a significant problem to the confectionery industry. Chocolate can, for instance, melt and stick to packaging which results in diminished consumer appeal. This problem is acutely felt when distributing and selling chocolate in warm or hot climates.

However, the temperature inside the mouth of the consumer is similar to the air temperature in hot climates. It is therefore difficult to maintain the relatively brittle nature and the storage stability of chocolate in hot climates whilst also maintaining consumer satisfaction once the product is placed in the mouth.

Previous attempts have been made to manufacture heat-resistant chocolate with satisfactory mouthfeel. Heat-resistant chocolate was described in WO-A-93/12664 comprising a water-in-oil (w/o) microemulsion. The chocolate was reported to resist temperatures of 35-40°C for up to 3 hours.

A method of producing heat-resistant chocolate was described in EP-A-1 673 977 which also related to the addition of a water-in-oil (w/o) emulsion or have an otherwise elevated water content. The chocolate was reported to retain its form when subjected to temperatures of up to about 45°C.

Despite these developments, there remains a need for a method of producing a chocolate composition having excellent heat-resistance and good flavour and mouthfeel. The present invention was devised with the aim of fulfilling this need. It is a further object of the present invention to provide a method which fulfills this need at similar or reduced efforts when compared with other methods of the art.

### Summary of the Invention

The present invention relates to a method of producing chocolate comprising mixing for 10-120 minutes a composition having a temperature of 35-50°C, the composition comprising:
chocolate base mass; and
one or more surfactants;
wherein the composition has a fat content of 22-30 wt.% and a water content of at least 1.1 wt. % relative to the total mass of the composition.

This method has the benefit of facilitating the production of chocolate with much improved heat-resistance whilst maintaining satisfactory flavour and mouthfeel. Moreover, the method does not place any particular demands on subsequent processing steps meaning that it has wide applicability. The wide applicability and versatility of the method means that integration into a chocolate-making process requires little extra effort on the part of the manufacturer.

Heat-resistance can be augmented by heat-treating the composition e.g. by exposing the mixed composition to microwave radiation and/or thermal heat-treatment.

Chocolate obtainable by the method of the present invention has excellent heat-resistance and is also defined by it containing the components of the mixed composition or artefacts of the components.

### Brief Description of the Drawings

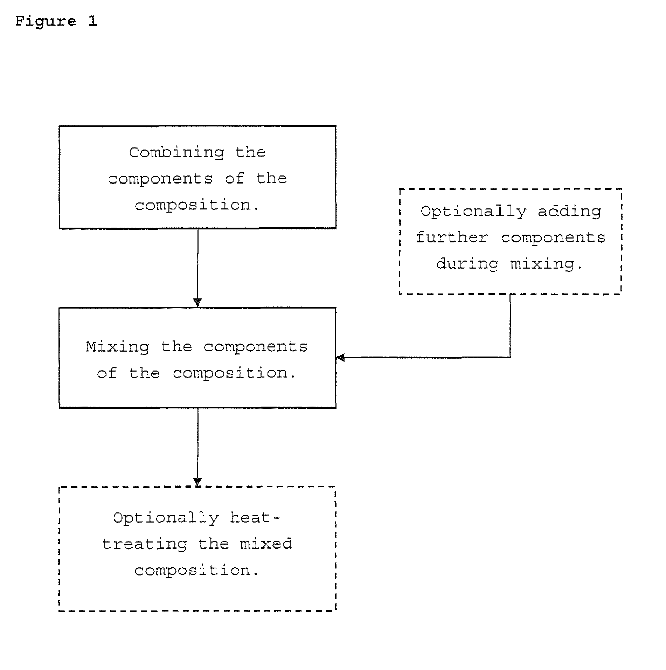

Figure 1: A flow diagram illustrating a method according to the present invention including optional steps.

### Detailed Description of the Invention

In the present application, the terms "comprising", "comprise(s)", "containing" and "contain(s)" in the context of one or more components (e.g. components in a composition) cover the case (i) where the referenced components are the only components and also the case (ii) where other components are also present. When a composition is defined as containing a generic compound (e.g. a surfactant) in a certain amount, the disclosure of a subset of compounds (e.g. anionic surfactants) falling within the generic class means that the subset of compounds can be present in said amount, and other compounds within the generic class but not within the subset may or may not also be contained in the composition. This applies mutatis mutandis to an individual compound(s) within the generic class or subset of the generic class.

Unless otherwise stated, a range described in terms of "X-Y" or "from X to Y" means a range including the values "X" and "Y". Unless otherwise stated, the term "average" denotes a mean average.

Within the meaning of the present invention, something is "heat-resistant" when it can be exposed for prolonged periods of time to temperature of up to 40°C, or up to 50°C, without losing its shape. For instance, something is regarded as heat-resistant if it exhibits a penetration force of 100 g or higher after maintained at 50°C for 2 hours and measured with a Stevens texture analyzer using a 45° cone with a speed of 1 mm/s to a depth of 3 mm. In comparison, something that is non-heat-resistant would typically exhibit a penetration of 55 g or less when measured under the same conditions.

The method of the present invention involves mixing a composition. This composition is described below.

The fat content of the composition is 22-30 wt.% relative to the total mass of the composition. In some embodiments, the fat content of the composition is 23-29 wt.%, 24-28 wt.% or 25-27 wt.% relative to the total mass of the composition. A fat content within this range contributes to improved heat-resistance and good taste and mouthfeel.

The fat content of the composition can be measured by acid hydrolysis followed by solvent extraction based on the industry standard method IOCC /AOAC 963.15 method - Fat in Cacao Products (1973).

Accordingly, components of the composition contributing to the fat content are those which would be measured by the above method. Material within the chocolate base mass can, for instance, contribute to the fat content.

Further optional components can also contribute to the total fat content. These components include cocoa butter, cocoa butter alternatives (CBAs), milk fat and vegetable fats which are liquid at standard ambient temperature and pressure (SATP, 25°C and 100 kPa), wherein the total amount of fat is 15 to 30 wt.%. CBAs include cocoa butter substitutes (CBSs), cocoa butter replacers (CBRs) and cocoa butter equivalents (CBEs) (the latter also including cocoa butter improvers (CBIs)).

Cocoa butter is the fat of the beans of the fruit of Theobroma cacao. It can be used as such or it can be added as part of a component comprising cocoa butter, such as cocoa liquor (usually containing about 50 wt.% of cocoa butter).

CBS designates lauric fats, i.e. short-chain fatty acid glycerides, such as those based on palm kernel and coconut, fractionated and hydrogenated. Because of poor miscibility with cocoa butter, CBS is normally used with only low-fat cocoa powder (10-12% fat).

CBEs are defined in Directive 2000/36/EC as complying with the following criteria:
a) they are non-lauric vegetable fats, which are rich in symmetrical monounsaturated triglycerides of the type POP, POSt and StOSt;
b) they are miscible in any proportion with cocoa butter, and are compatible with its physical properties (melting point and crystallization temperature, melting rate, need for tempering phase);
c) they are obtained only by the processes of refining and/or fractionation, which excludes enzymatic modification of the triglyceride structure.

Suitable CBEs include illipe, Borneo tallow, tengkawang, palm oil, sal, shea, kokum gurgi and mango kernel. CBEs are usually used in combination with cocoa butter. In one embodiment, the composition comprises no more than 5 wt.% of CBEs. CBEs also encompass a harder version also known as cocoa butter improver (CBI), having a content of triacylglycerol containing stearic-oleic-stearic acids. It is specifically used in chocolate formulations having a high content of milk fat or those meant for tropical climates. According to European legislation, as long as CBEs are present at no more than 5 wt.% (to replace cocoa butter), the resulting product may still be labeled as chocolate (and need not be labeled as a substitute).

CBR designates non-tempering, non-lauric fats differing in composition from cocoa butter and the tempering CBE (including CBI). It is produced by fractionation and hydrogenation of oils rich in C16 and C18 fatty acids, forming trans acids, which increases the solid phase of the fat. Suitable sources for CBR include soya, cottonseed, peanut, rapeseed and corn (maize) oil.

A liquid vegetable fat may be employed when a liquid chocolate product is desired. Suitable vegetable fats include corn oil, cotton seed oil, rapeseed oil, palm oil, safflower oil, and sunflower oil.

The present invention is further applicable to chocolate products in which some or all of the fat is constituted by a partly or wholly non-metabolizable fat, for example Caprenin.

The water content of the composition is ≥ 1.1 wt.% relative to the total mass of the composition. The water content can, in some embodiments, be ≥ 1.15 wt.%, ≥ 1.2 wt.%, ≥ 1.25 wt.%, ≥ 1.3 wt.%, ≥ 1.35 wt.% or ≥ 1.4 wt.% relative to the total mass of the composition. The water content can also be, in some embodiments, ≥ 2.5 wt.%, s 2.4 wt.%, ≤ 2.3 wt.%, ≤ 2.2 wt.%, ≤ 2.1 wt.% or ≤ 2.0 wt.%. When the water content is as defined above, the composition results in chocolate with improved heat-resistance and also good taste and mouthfeel.

The water content of the composition can be determined by e.g. Karl Fischer titration. Karl Fischer titration is suitably conducted at 50°C using a 3:2:1 (v/v) mixture of methanol:chloroform:formamide to dissolve the sample.

The chocolate base mass included in the composition is not particularly limited and can be plain, dark, milk, white and compound chocolate base mass. In some embodiments, the chocolate base mass comprises milk chocolate base mass, white chocolate base mass or a mixture of the two. The total amount of chocolate base mass in the composition is not particularly limited. In some embodiments, the composition comprises≤ 97 wt.%, ≤ 95 wt.%, s 93 wt.% or s 90 wt.% relative to the total mass of the composition.

The composition comprises one or more surfactants. The total content of the one or more surfactants is, in some embodiments ≥ 0.01 wt%, ≥ 0.05 wt%, ≥ 0.1 wt% or ≥ 0.2 wt%, and is sometimes in the range 0.3-2.0 wt.%, 0.4-1.9 wt.%, 0.5-1.8 wt.%, 0.55-1.7 wt.%, 0.6-1.6 wt.% or 0.65-1.5 wt.%. A subset of surfactants or an individual surfactant can also be present in these ranges. In some embodiments, the one or more surfactants can include lecithin, lecithin derived from soya bean, safflower, sunflower, corn etc., fractionated lecithins enriched with either phosphatidyl choline, phosphatidyl ethanolamine, phosphatidyl inositol; emulsifiers derived from oats, mono- and diglycerides and their tartaric esters, monosodium phosphate derivatives of mono- and diglycerides of edible fats and oils, sorbitan monostearate, polyoxyethylene sorbitan monostearate, hydroxylated lecithin, synthetic phospholipids such as ammonium phosphatides, polyglycerol polyricinoleate (PGPR), lactylated fatty acid esters of glycerol and propylene glycol, polyglycerol esters of fatty acids, citric acid esters of fatty acids, propylene glycol mono- and diesters of fats and fatty acids. In some embodiments, the content ranges above refer to the content of lecithin.

In some embodiments, ≤ 0.2 wt.%, ≤ 0.1 wt.%, ≤ 0.05 wt.% or ≤ 0.025 wt.% of pure water is added to the composition relative to the total mass of the composition. In these embodiments, the water content of the composition results from water content within the components added to the composition. The chocolate base mass can, for instance, contain water which therefore contributes to the water content of the composition.

In some embodiments, the particles within the composition have a d90 diameter in the range of 10-25 µm, 12-23 µm, or 14-21 µm. A d90 diameter is a term used in the art and can be summarised as the diameter of the 90^{th} percentile i.e. 90% of particles have a diameter below this value.

Particle size distribution of chocolate is measured using a Malvern Mastersizer 2000 and organic solvent as the dispersant. A subsample of the chocolate is dispersed in the organic solvent in a test tube and ultrasonicated for 3-5 mins to obtain discrete, individual particles prior to being added into the Mastersizer for measurement.

The composition optionally comprises one or more dairy products, examples of which include modified whey powder, sweet whey powder and skimmed milk powder. The total content of dairy products is, in some embodiments, 0-10 wt.%, 0-7 wt.%, 0-5 wt.% or 0-1 wt.% relative to the total mass of the composition.

The composition may optionally comprise one or more components for altering its flavour, which are sometimes referred to as flavourants. These components may alter the degree to which the composition is sweet, sour, bitter, salty or savoury. Suitable flavours include those of fruit, citrus fruit, chocolate, mint, caramel, cream, spices, coffee, toffee, nuts and plant extracts.

The composition can, in some embodiments, comprise one or more of hydrated salts, hydrated sugars and hydrated sugar alcohols in a total amount of 1-15 wt.% relative to the total mass of the composition.

Hydrated salts include, for example, hydrates of alkali metal salts and hydrates of alkaline earth metal salts, such as sodium carbonate decahydrate and magnesium carbonate pentahydrate. In one embodiment of the invention, the composition comprises up to 15 wt.% of hydrated salts or part thereof, sometimes ≥ 0.1 wt.%, ≥ 0.25 wt.% or ≥ 0.5 wt.% and ≤ 15 wt.%, ≤ 12 wt.% or ≤ 10 wt.%. The content of hydrated salts is sometimes in the range of 0.5-4 wt.%, and sometimes 1-3 wt.%.

Hydrated sugars include, for example, hydrated monosaccharides, hydrated disaccharides and hydrated polysaccharides. Monosaccharides include, for example, dextrose (glucose), fructose (levulose), galactose, xylose and ribose, disaccharides include, for example, saccharose (sucrose) and lactose, and polysaccharides include, for example, starch, glycogen and cellulose. An exemplary and preferred hydrated monosaccharide is dextrose monohydrate, and an exemplary and preferred hydrated disaccharide is lactose monohydrate. In some embodiments, the composition comprises 5-15 wt.% of hydrated sugars and sometimes comprises 5-15 wt.%, 8-12 wt.% or 9-11 wt.% of dextrose monohydrate.

Hydrated sugar alcohols include, for example, the hydrated forms of glycerol, sorbitol, erythritol, xylitol, mannitol, lactitol and maltitol. In some embodiments, the composition comprises up to 15 wt.% or 5-15 wt.% of hydrated sugar alcohols.

In some embodiments, all the components of the composition are brought together prior to commencing mixing. In other embodiments, some of the components are added after the mixing has commenced as illustrated in Figure 1, provided that the combined components satisfy the description of the composition above and that all components are added before halfway through the mixing.

The composition is mixed for 10-120 minutes at a temperature described below. In some embodiments, mixing occurs for 12-110 minutes, 15-100 minutes, 17-90 minutes, 20-80 minutes, or 22-70 minutes. Mixing for these time intervals contributes to improved heat-resistance whilst maintaining good flavour and mouthfeel.

The composition is mixed at a temperature of 35-50°C. In some embodiments, mixing occurs at a temperature of 36-45°C, or 37-42°C. Mixing at this temperature contributes to improved heat-resistance whilst maintaining good flavour and mouthfeel. The temperature at which the composition is mixed refers to the mean average temperature determined over the course of the mixing.

In some embodiments, mixing does not substantially aerate the composition. That is to say, the composition is not mixed to deliberately include bubbles of air or any of its constituent gases, but mixing can tolerate the incidental inclusion of bubbles of air or any of its constituent gases.

In some embodiments, the mixing step is a step of conching, which is a term known to those skilled in the art. In some embodiments, a conching step can be used to alter the flavour of the composition by releasing volatile components or by oxidizing components of the composition.

Whilst air flowing through a conche is known to reduce moisture content of the composition being conched, this effect is substantially lower in the present invention owing to the short time period and low temperature of the mixing step. The water content of the composition before and after being mixed and/or conched can, in some embodiments, be substantially the same.

In some embodiments, the mixing step can be performed with a Lipp, Aoustin or Elk conche or a Hobart mixer.

In those embodiments in which the mixing step is a conching step, conching can be conducted using conventional apparatus. Examples of conventional conching apparatus include a long conche, a rotary conche or a continuous low volume conche.

Once the composition is mixed, it can optionally undergo further processing steps. Optional further processing steps include, separately or in combination, tempering the chocolate mass, molding and cooling the optionally tempered chocolate mass chocolate mass (to produce a molded product) and/or packaging the optionally tempered or molded chocolate mass. One of the benefits of the method of the present invention is that specific further processing steps are not required to furnish a final product having the desired heat-resistance, flavour and mouthfeel.

In some embodiments, further processing can be optionally used to improve heat-resistance. Here, improving heat-resistance includes enhancing the degree of heat-resistance already present in the chocolate or making the heat-resistance property more robust to subsequent handling. In some embodiments, the mixed composition can undergo heat-treatment to improve the heat-resistance as illustrated in Figure 1. Heat-treatment can be conducted before during or after optional processing steps performed after the composition has been mixed, provided that the optional heat-treatment is conducted after the mixing.

In some embodiments, heat-treatment can be conducted by exposing the composition to microwave radiation. Any conventional microwave source can be used for this purpose, such as a conventional 3.3 kW microwave oven or larger scale microwave tunnel. Any frequency suitable for heating purposes is appropriate e.g. 2.45 GHz and 5.8 GHz. The distance between microwave source and sample to be heat-treated is typically is the range of 5-15 cm. The microwave treatment can be applied from the top and/or the bottom of the sample can also be performed from the top and the bottom alternately. The energy density induced by the magnetrons can be in the range of 66-1085 kJ/kg whereby higher energy density values reduce the processing time from approximately 3-8 minutes to approximately 30-60 seconds.

In some embodiments heat-treatment is conducted by thermal treatment i.e. heat-treatment not implemented by deliberate exposure to microwave radiation. This mode of heat-treatment can be conducted using conventional heating equipment such as an oven. Thermal heat-treatment can, in some embodiments, be conducted at 30-50°C, 32-45°C or 35-40°C. In some embodiments, thermal heat-treatment is conducted at 30-35°C for compositions comprising ≥ 5 wt.% cocoa butter. In some embodiments, thermal heat-treatment is conducted at 30-50°C for compositions comprising ≤ 5 wt.% cocoa butter and ≥ 5 wt.% cocoa butter alternative.

Thermal heat-treatment is, in some embodiments, conducted for 2-5 weeks, or 3-4 weeks. Conducting thermal heat-treatment within this timeframe contributes to excellent heat-resistance whilst also maintaining good flavour and mouthfeel.

In some embodiments, heat-treatment is conducted using both microwave-based heat-treatment and thermal heat-treatment. The order, combination and number of heat-treatments are not particularly limited and the two types of heat-treatment can be used simultaneously.

The present invention also relates to chocolate obtainable by the method described above. Chocolate obtainable by the method described above has heat-resistance as defined above and additionally contains the components of the composition defined above or artefacts of the components.

The present invention is further illustrated by the following Examples, which should not be construed as defining the outer limits of the invention in its broadest aspect.

### Examples

### Analytical Techniques

Water Content: Approximately 1.0 g of chocolate, which has been sliced and chopped into small pieces to aid dissolution, is added to the conditioned solvent (a 1:1:1 mixture of Methanol, formamide and chloroform) in a volumetric Karl Fisher titration vessel held at 50°C. It is titrated with Hydranal Composite 5. Once the end point of the following reaction is reached i.e. when all water present has been consumed, the amount of titrant required is used to calculate the amount of water in the original sample. Measurements are made in duplicate and the mean value recorded.

Fat Content: Total fat was determined by acid hydrolysis followed by solvent extraction based on the industry standard method IOCC /AOAC 963.15 method - Fat in Cacao Products (1973).

Hardness (heat resistance): penetration force was measured with a Stable Microsystems texture analyzer using a 45° cone with a speed of 1 mm/s to a depth of 3 mm.

### Materials

The chocolate base mass comprised cocoa liquor (10.2 wt.%), sucrose (47.0 wit.%), skimmed milk powder (12.5 wt.%), anhydrous milk fat (4.8 wt.%), cocoa butter (17.5 wt.%) and sweet whey powder (8.0 wt.%) and had an overall fat content of 29 wt.%; the lecithin was purchased from a commercial supplier; the cocoa butter substitute was CEBES MC 80 manufactured by AAK; and the chocolate flakes comprised the same components as the chocolate base mass.

### Examples 1 and 2 and Comparative Example 1

The components of Example 1 shown in Table 1 were combined in a Brabender^{®} mixer and mixed for 20 minutes at 40°C before being poured into a mould. The components of Comparative Example 1 were combined without using the Brabender^{®} mixer treatment and then poured into a mould.

**[Table 1]**

| **Component** | **Ex.1** | **C.Ex.1** |
|---|---|---|
| **ChocolateBase Mass (g)** | 1.25 | 1.25 |
| **Cocoa Butter Substitute (g)** | 14.47 | 14.47 |
| **Lecithin (g)** | 1.74 | 1.74 |
| **Chocolate Flakes (g)** | 232.54 | 232.54 |
| **Total (g)** | 250.00 | 250.00 |
| **Lecithin (wt.%)** | 0.7 | 0.7 |
| **Total Fat Content (wt.%)** | 29.0 | 29.0 |
| **Total Water Content (wt.%)** | 1.3 | 1.1 |

Samples were moulded and stored at 16°C following production. One day after production, all samples were packed and stored at 50°C. The samples were then analysed for hardness and taste at set time intervals, the results of which are shown in Table 2.

**[Table 2]**

| **Time at 50°C** | **Analysis** | **Ex.1** | **C.Ex.1** |
|---|---|---|---|
| 2 hours | Hardness | 41 | Collapsed |
| | Taste | Not Determined | Not Determined |
| 1 week | Hardness | 145 | 8 |
| | Taste | Good | Good |
| 2 weeks | Hardness | 150 | Unacceptable |
| | Taste | Good | Good |
| 3 weeks | Hardness | 150 | Unacceptable |
| | Taste | Okay | Good |

The results shown in Table 2 illustrate the improved heat-resistance of chocolate formed by a method according to the present invention. Although the initial hardness of Example 1 was slightly below the prescribed cut-off, this level of heat-resistance is nevertheless useful and represents a very significant improvement over the level obtained by standard methods as represented by Comparative Example 1.

### Example 2 and Comparative Example 2

The components of Example 2 shown in Table 3 were combined in a Brabender^{®} mixer and mixed for 20 minutes at 40°C before being poured into a mould. The components of Comparative Example 2 were combined without using the Brabender^{®} mixer treatment and then poured into a mould. Once poured into moulds, the compositions of Example 2 and Comparative Example 2 were subjected to microwave radiation by passing samples twice through a microwave tunnel: 1^{st} pass at 3.3 m/s and 100% energy input; 2^{nd} pass at 3.5 m/s and 100% energy input.

**[Table 3]**

| **Component** | **Ex.2** | **C. Ex.2** |
|---|---|---|
| **Chocolate Base Mass (g)** | 1.25 | 1.25 |
| **Cocoa Butter Substitute (g)** | 14.47 | 14.47 |
| **Lecithin (g)** | 1.74 | 1.74 |
| **Chocolate Flakes (g)** | 232.54 | 232.54 |
| **Total (g)** | 250.00 | 250.00 |
| **Lecithin (wt.%)** | 0.7 | 0.7 |
| **Total Fat Content (wt.%)** | 29.0 | 29.0 |
| **Total Water Content (wt.%)** | 1.3 | 1.1 |

Following microwave treatment, the samples were moulded and stored at 16°C. One day after production, all samples were packed and stored at 50°C. The samples were then analysed for hardness and mouthfeel at set time intervals, the results of which are shown in Table 4.

**[Table 4]**

| **Time at 50°C** | **Analysis** | **Ex.2** | **C.Ex.2** |
|---|---|---|---|
| 2 hours | Hardness | 360 | Collapsed |
| | Taste | Not Determined | Not Determined |
| 1 week | Hardness | 480 | 15 |
| | Taste | Acceptable | Good |
| 2 weeks | Hardness | 400 | Not tested |
| | Taste | Acceptable | Good |
| 3 weeks | Hardness | 410 | Not tested |
| | Taste | Acceptable | Acceptable |

The results shown in Table 4 further illustrate the excellent heat-resistance provided by the present invention. Excellent hardness was obtained using the microwave treatment and this hardness was amplified by the subsequent thermal heat-treatment. In comparison, Comparative Example 2 shows that heat-treatment alone cannot compensate for the low heat-resistance caused by the absence of the mixing step according to the present invention.

## Claims

1. A method of producing chocolate comprising mixing for 10-120 minutes a composition having a temperature of 35-50°C, the composition comprising:
chocolate base mass; and
one or more surfactants;
wherein the composition has a fat content of 22-30 wt.% and a water content of at least 1.1 wt.% relative to the total mass of the composition.

2. A method according to Claim 1, wherein the mixing of the composition is a conching step.

3. A method according to Claim 1 or Claim 2, wherein the total surfactant content of the composition is 0.3-2.0 wt.%.

4. A method according to any preceding claim, wherein the temperature of the composition during mixing is 37-45°C.

5. A method according to any preceding claim, wherein the composition is mixed for 10-70 minutes.

6. A method according to any preceding claim, wherein the water content of the composition is 1.2-2.5 wt.% relative to the total mass of the composition.

7. A method according to any preceding claim, wherein the composition comprises one or more of hydrated salts, hydrated sugars and hydrated sugar alcohols in a total amount of 1-15 wt.% relative to the total mass of the composition.

8. A method according to any preceding claim, wherein the chocolate base mass comprises milk chocolate, white chocolate or a mixture of milk chocolate and white chocolate.

9. A method according to any preceding claim, wherein the particles in the composition have a d90 diameter of 10-25 µm.

10. A method according to any preceding claim, wherein the composition undergoes heat-treatment after the mixing.

11. A method according to Claim 10, wherein the heat-treatment comprises exposing the composition to microwave radiation.

12. A method according to Claim 10, wherein the heat-treatment comprises thermocuring at 30-50°C.

13. A method according to Claim 12, wherein the composition is thermocured for from 2 to 5 weeks.

14. Chocolate obtainable by a method according to any preceding claim.
